# EUROPEAN PATENT SPECIFICATION

(11) **EP 0 936 477 B1**
(45) Date of publication and mention of the grant of the patent: **03.05.2006**
(21) Application number: 99301183.2
(22) Date of filing: 17.02.1999
(51) Int. Cl.: G01V 1/30, G01V 1/50

(54) **Evaluating Stoneley waves and formation parameters**
Auswertung von Stoneleywellen und Formationsparametern
Evaluation des ondes de Stoneley et des paramètres de formation

(30) Priority: 17.02.1998 US 24325
(43) Date of publication of application: 18.08.1999
(73) Proprietor: HALLIBURTON ENERGY SERVICES, INC., Houston, Texas 77020 (US)
(72) Inventor: Chin, Wilson C., Houston, Texas 77063 (US)
(74) Representative: Beresford, Keith Denis Lewis

(56) References cited:
- WO-A-93/07513
- US-A- 4 813 028
- S.K.CHANG, H.L.LIU, D.L.JOHNSON: "Low-Frequency tube waves in permeable rocks" GEOPHYSICS, vol. 53, no. 4, 1988, pages 519-527, XP002140258
- A.N.NORRIS: "Stoneley-wave attenuation and dispersion in permeable formations" GEOPHYSICS, vol. 54, no. 3, 1989, pages 330-341, XP002140259

## Description

The present invention relates to a method of and apparatus for evaluating a parameter of a sub-surface formation using Stoneley waves, for determining the properties of earth formations, such as permeability, through evaluation of Stoneley wave data.

Interfacial waves are waveforms generated at fluid interfaces. The interface can be that between two fluids, as in the interface between two liquids; or it can be between a fluid and a solid, as in the case of Stoneley waves. In the context ofwell logging and formation analysis, Stoneley waves will traverse the interface between a generally compressible fluid column in a borehole and the slightly elastic sidewalls defining that borehole. Stoneley waves have long been recognized in well logging and seismic surveying, but typically have been regarded as undesirable manifestations which have interfered with obtaining sonic speed data associated with pressure and shear waves. Many conventional logging systems have sought to eliminate, or compensate for, the detection of Stoneley waves in evaluating formation parameters.

Some methods have, however, been proposed to establish a correlation between Stoneley waves and formation permeability. Generally, these methods have been based upon experimental observations and detailed numerical simulation to generate models. Such analyses have established the correlation of Stoneley waves to eight distinct rock, fluid and geometric parameters:
1. Well radius (Rwell)
2. Rock porosity (phi)
3. Formation permeability (k)
4. Solid shear modulus (Gshear)
5. Borehole mud bulk modulus (Bmud)
6. Mud density (rho mud)
7. Pore fluid bulk modulus (Boil)
8. Pore fluid viscosity (mu oil)

Such analyses are described, for example, in "Low-Frequency Tube Waves in Permeable Rocks," by Chang et al. (Geophysics, Volume 53, April, 1988); and modeling programs based upon similar analyses have been prepared by the Massachusetts Institute of Technology Full Waveform Acoustic Logging Consortium. A similar analysis is also set forth in "Permeability Estimation From Full Waveform Acoustic Logging Data," by Bums et al. (The Log Analyst, March-April, 1988). Evaluation of formation permeability through use ofStoneley waves is also disclosed in "Predicting Relative and Absolute Variations of In-Situ Permeability From Full Waveform Acoustic Logs," by Bums (The Log Analyst, May-June 1991).

Such analyses have the drawback ofbeing numerically oriented and extremely complex, and thus being highly disadvantageous, ifnot impractical, for use in evaluating formations in a commercially viable manner. For example, because of the dependence of permeability upon at least eight independent formation and fluid variables, solutions for permeability have been difficult, and have yielded less than optimally reliable results.

US-A-4 813 028 describes an acoustic well-logging method and apparatus that utilises a rare earth acoustic transducer to provide low frequency acoustic energy within the borehole. A set ofreceivers is provided within the borehole and several times each second a particular different transducer and receiver combination is selected. The receivers thus provide a set of waveforms from which Stoneley wave attenuation and shear wave velocity measurements are obtained. The measured values of Stoneley wave attenuation and shear wave velocity are then combined with other known measured values of borehole characteristics to enable the formation permeability to be determined.

WO 93 075 13 describes methods and apparatus for discrete frequency tube-wave logging of boreholes.

### Summary of the invention

In one aspect, the present invention provides a method of evaluating a parameter of a sub-surface formation as set out in claim 1.

In another aspect, the present invention provides apparatus for evaluating a parameter ofa sub-surface formation as set out in claim 19.

An embodiment of the present invention provides a method and apparatus for evaluating formation parameters in response to Stoneley wave data that are less complex than previously known analysis, and different approaches are provided which facilitate alternative methods of determining formation parameters.

In an embodiment, parameters of a sub-surface formation, including the permeability of the formation, are evaluated through use ofmeasurements of Stoneley wave propagation from an energy source, preferably measured at at least two spaced locations within the wellbore. The Stoneley wave propagation data will be correlated with parameters ofthe formation and ofthe fluids within which the Stoneley waves are propagating. Analysis maybe made in reference to either Stoneley wave amplitude or phase velocity. In one preferred implementation, the method includes the defining of a single velocity parameter which is functionally representative of sound speed within the fluid column within the borehole, adjusted for the effects ofsidewall elasticity. In a particularly preferred implementation, a predetermined relationship is established between the velocity parameter, the formation parameters and the fluid parameters to define a single lithology parameter which maybe utilized to determine permeability, thereby minimizing the number of variables which must be considered.

### Brief Description of the Drawings

Figure 1 depicts Stoneley waveforms as detected at a plurality of receivers in space in relation to an energy source or transmitter (not shown), depicted as a function of time.
In Figures 2-10, formation and fluid parameters for a typical logging situation were assumed, and generated synthetic Stoneley seismograms are shown. Only the (input) permeability varies from figure to figure. Predicted values of permeability versus input values are listed in each figure.
Figures 2 A-B depict synthetically modeled Stoneley waves under assumed formation conditions, at a modeled permeability of 0.0001 darcy; depicted in Figure 2A as time traces, and in Figure 2B as amplitude spectra.
Figures 3 A-B depict synthetically modeled Stoneley waves under assumed formation conditions, at a modeled permeability of 0.0010 darcy; depicted in Figure 3A as time traces, and in Figure 3B as amplitude spectra.
Figures 4 A-B depict synthetically modeled Stoneley waves under assumed formation conditions, at a modeled permeability of 0.0100 darcy; depicted in Figure 4A as time traces, and in Figure 4B as amplitude spectra.
Figures 5 A-B depict synthetically modeled Stoneley waves under assumed formation conditions, at a modeled permeability of0. 1000 darcy; depicted in Figure 5A as time traces, and in Figure 5B as amplitude spectra.
Figures 6 A-B depict synthetically modeled Stoneley waves under assumed formation conditions, at a modeled permeability of 0.5000 darcy; depicted in Figure 6A as time traces, and in Figure 6B as amplitude spectra.
Figures 7 A-B depict synthetically modeled Stoneley waves under assumed formation conditions, at a modeled permeability of 1.0000 darcy; depicted in Figure 7A as time traces, and in Figure 7B as amplitude spectra.
Figures 8 A-B depict synthetically modeled Stoneley waves under assumed formation conditions, at a modeled permeability of 2.0000 darcies; depicted in Figure 8A as time traces, and in Figure 8B as amplitude spectra.
Figures 9 A-B depict synthetically modeled Stoneley waves under assumed formation conditions, at a modeled permeability of 5.0000 darcies; depicted in Figure 9A as time traces, and in Figure 9B as amplitude spectra.
Figures 10 A-B depict synthetically modeled Stoneley waves under assumed formation conditions, at a modeled permeability of 10.0000 darcies; depicted in Figure 10A as time traces, and in Figure 10B as amplitude spectra.
Figure 11 depicts a water wave tank on a vertically accelerable platform in a configuration useful for analysis of Stoneley wave performance.
Figure 12 depicts very schematically apparatus for receiving and logging Stoneley waves.
Figure 13 shows a block diagram of apparatus for processing data logged using the apparatus shown.

### Detailed Description of Preferred Embodiments

Methods in accordance with the present invention utilize measurements of at least two Stoneley waveforms obtained at spaced receiver stations. In an anticipated implementation, energy will be transmitted from a logging tool transmitter within an earth borehole into the fluid column within the borehole, and will be received at two or more spaced receiver stations within the logging tool in a manner known to those skilled in the art. The energy input will preferably be input to the borehole at a frequency within a range of approximately 500 Hz - 2KHz, with frequencies toward the lower end of this range being preferred. The multiple receivers within the logging tool should have either matched responses or known responses to facilitate compensation to achieve response equalization. Thus, receivers can either be manufactured and selected to provide two receivers which yield essentially identical responses to the same energy stimulus (i.e., "matched receivers"); or the response characteristics of the receivers may be evaluated such that an actual measured response may be adjusted (such as through amplification, attenuation, etc.) to yield a compensated waveform, or numerical representation thereof, which matches the responses (either actual or compensated) of other receivers. Alternatively, known responses of individual receivers may be normalized to a selected reference response curve.

In contrast to previous numerically based methods, the present invention facilitates evaluating the permeability of a formation in response to the sound speed in the fluid column within the borehole relative to the time differential between receipt of a Stoneley wave at each of the two receivers. In accordance with one implementation of the present invention, the permeability (k) of a formation may be evaluated in general response to the following relation: $k = \frac{2 {μ}_{oil} {ρ}_{oil} {{c}_{oil}}^{2} {{R}_{well}}^{2} {{ ( {Σ}_{c} - {Σ}_{d} ) / {Σ}_{c} }}^{2} {( V / Δ t )}^{2}}{{{ρ}_{mud}}^{2} {V}^{5} φ { 8 π V {f}_{0} - ( 2 V / Δ t ) ( {Σ}_{c} - {Σ}_{d} ) / {Σ}_{c} }}$
Wherein:
µₒᵢₗ represents the pore fluid viscosity;
ρₒᵢₗ represents the density of the fluid or "oil" within the formation;
Cₒᵢₗ represents the sound speed in the formation fluid (or "oil");
R_{well} represents the well radius;
Σ_{c} represents the total energy of the waveform from the first receiver "c" closer to the transmitter;
Σ_{d} represents the total energy of the waveform from a second more distant receiver "d"'
ρ_{mud} represents the density of the mud (i.e., the density of the fluid within the fluid column);
φ represents the porosity of the formation;
f₀ represents the center frequency (Hz) at which the transmitter operates; and
Δt represents the distance between the two receivers D_{recvr} divided by the velocity V, that is Δt = D_{recvr}/V; where
V represents a velocity parameter defined by the relation: $V = 1 / \sqrt{{ {ρ}_{mud} ( 1 / {B}_{mud} + 1 / {G}_{shear} ) }} > 0$
Wherein:
B_{mud} represents the bulk modulus of the borehole mud or fluid, and
Gₛₕₑₐᵣ represents the solid shear modulus.

As can be seen from a review of equation 2, the velocity parameter (V) is representative of the sound speed within the mud column, and takes into consideration the elasticity of the rock which contains the column. As those skilled in the art will recognize, if Gₛₕₑₐᵣ were infinite, then the velocity parameter (V) would reduce to the mud sound speed $( \sqrt{\frac{{B}_{mud}}{{ρ}_{mud}}} ) .$ However, since Gₛₕₑₐᵣ will always be finite, the velocity parameter always will be less than the mud sound speed. Velocity parameter (V), therefore, represents the mud sonic speed as a function of solid shear modulus.

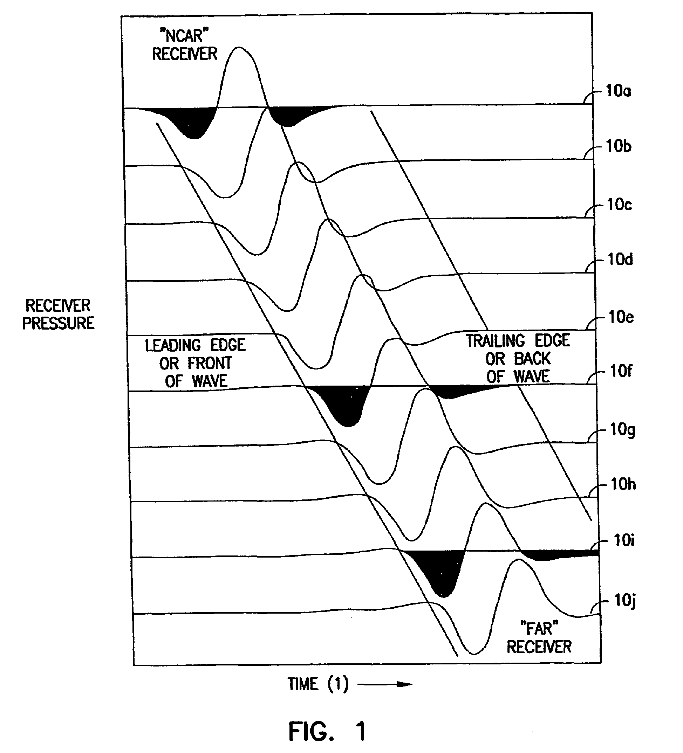

Referring now to Figure 1, therein are depicted Stoneley waveforms at ten spaced receivers, expressed as a function of modeled receiver pressure versus time. A first trace 10a represents the receiver pressure at a receiver closest to the energy source generating the wave. As can be seen, for example, through comparison of trace 10a to trace 10d, as the distance from the energy source to the receiver increases, the energy of the front portion of the wave increases over time, while the energy of the trailing edge decreases over time. However, the center energy remains essentially constant in time. Thus, the energy in the Stoneley wave redistributes from the back of the wave to the front of the wave as the wave travels in time. As will be discussed below in relation to equations 1-7, one method for determining permeability in accordance with the present invention relies upon the determining of Stoneley wave amplitudes at a plurality of receivers. The filtering to isolate Stoneley waves can potentially lend to erroneous amplitude determinations. The depicted energy redistribution may be utilized to conform accurate filtering, and thus accurate Stoneley wave data.

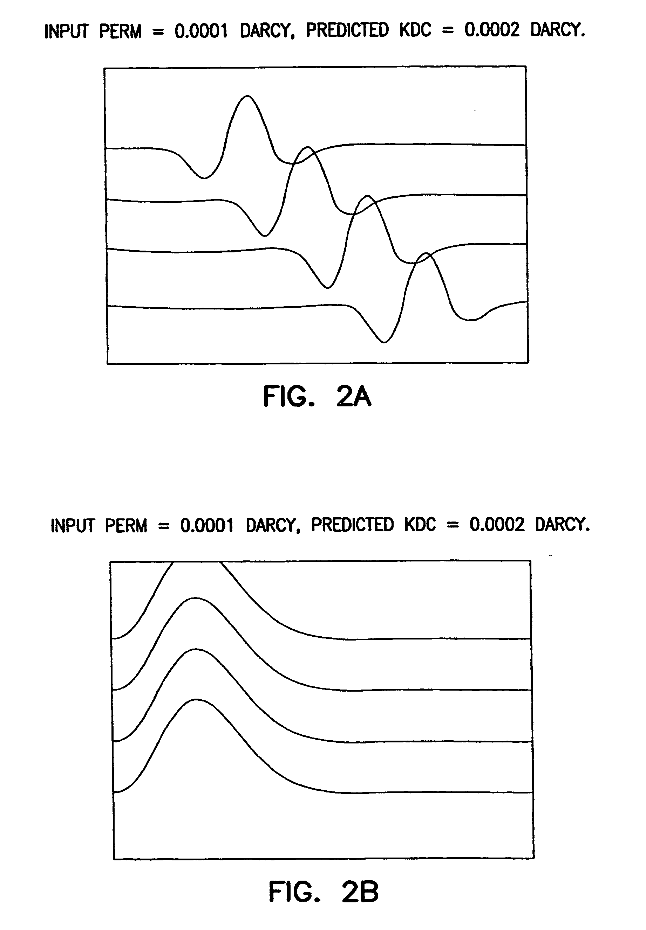

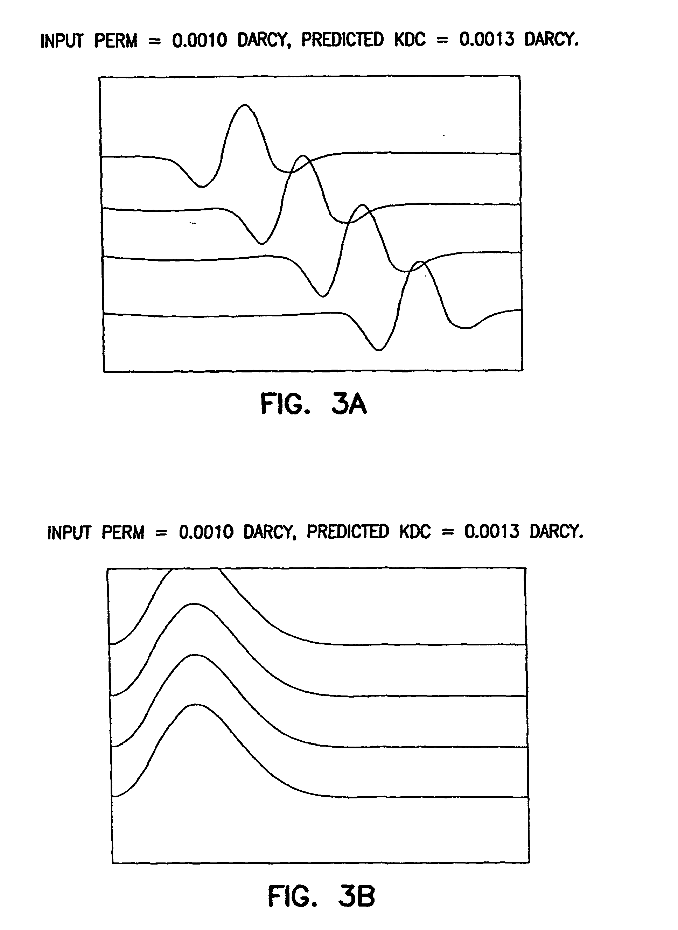

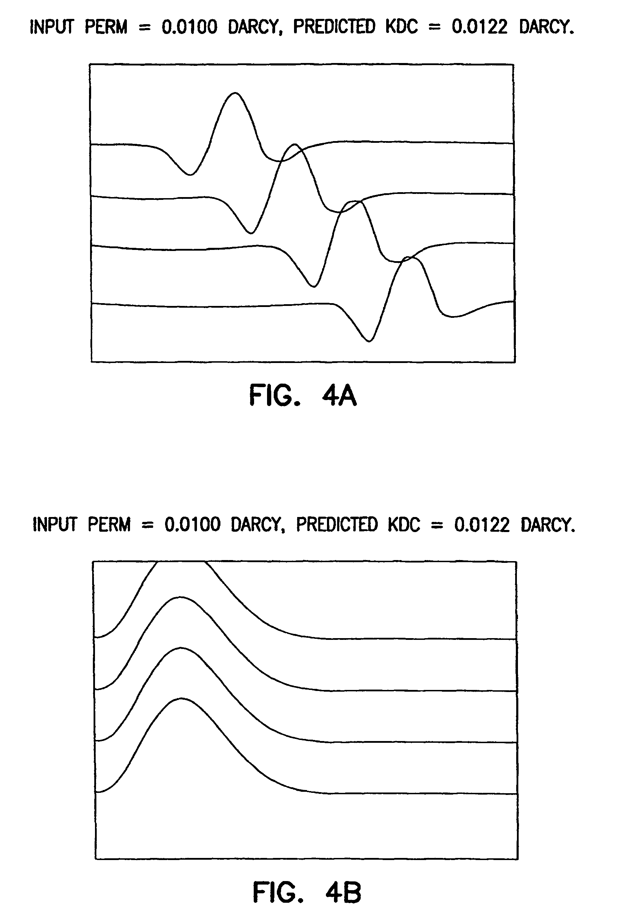

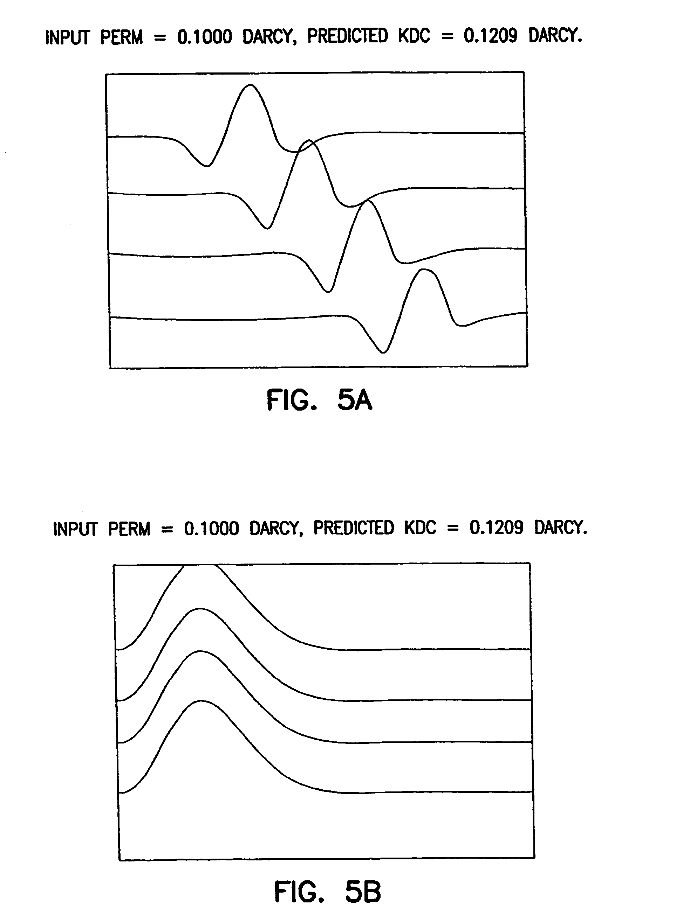

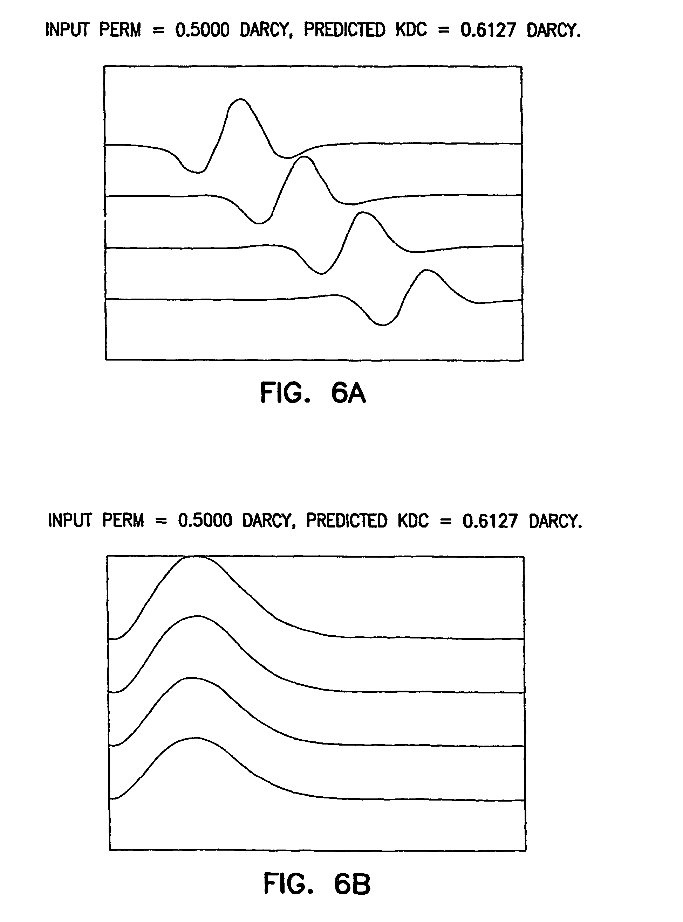

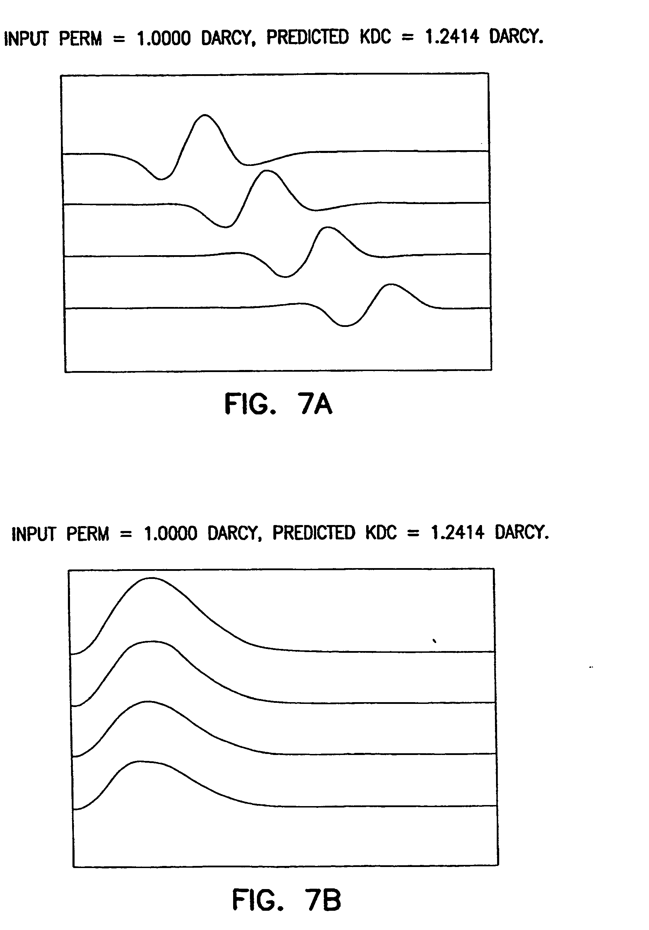

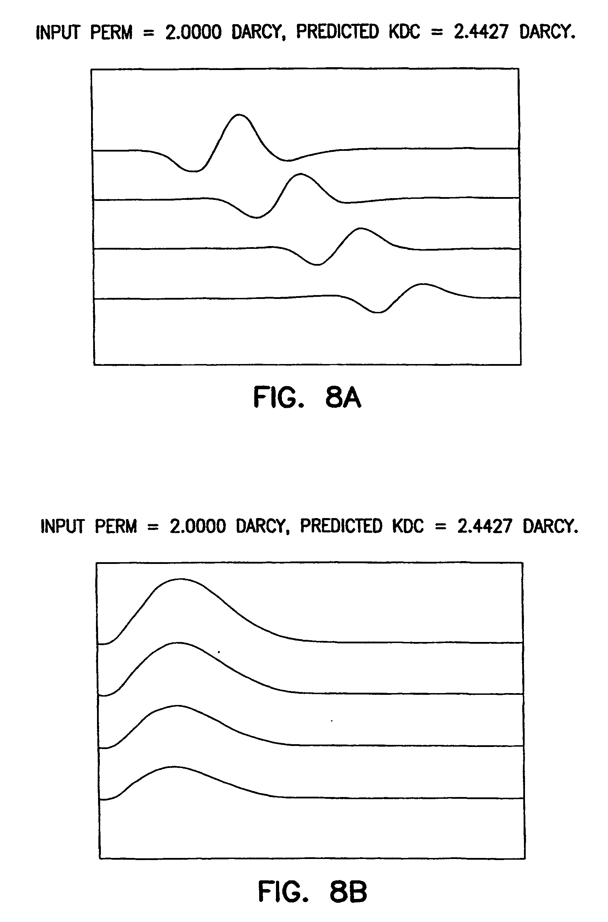

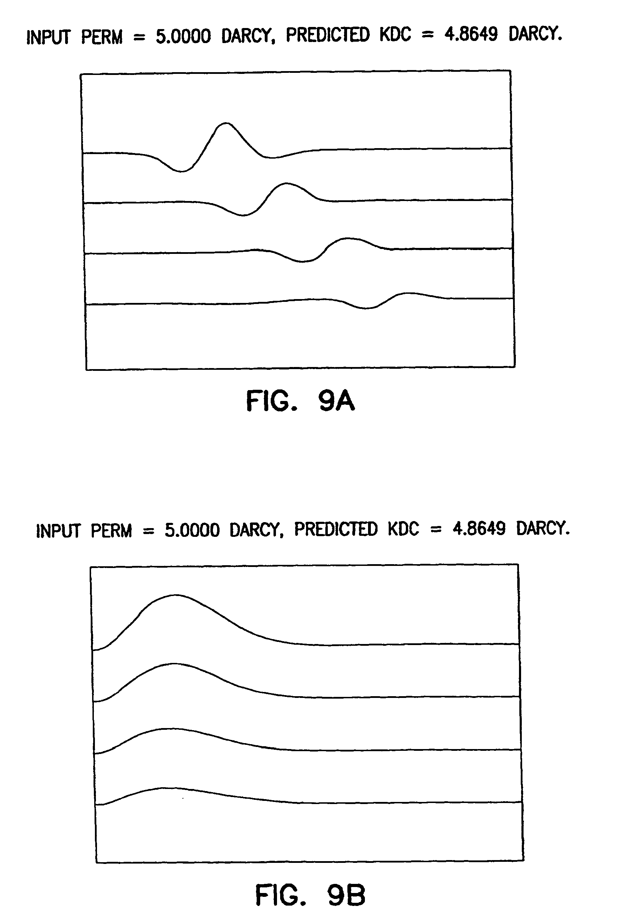

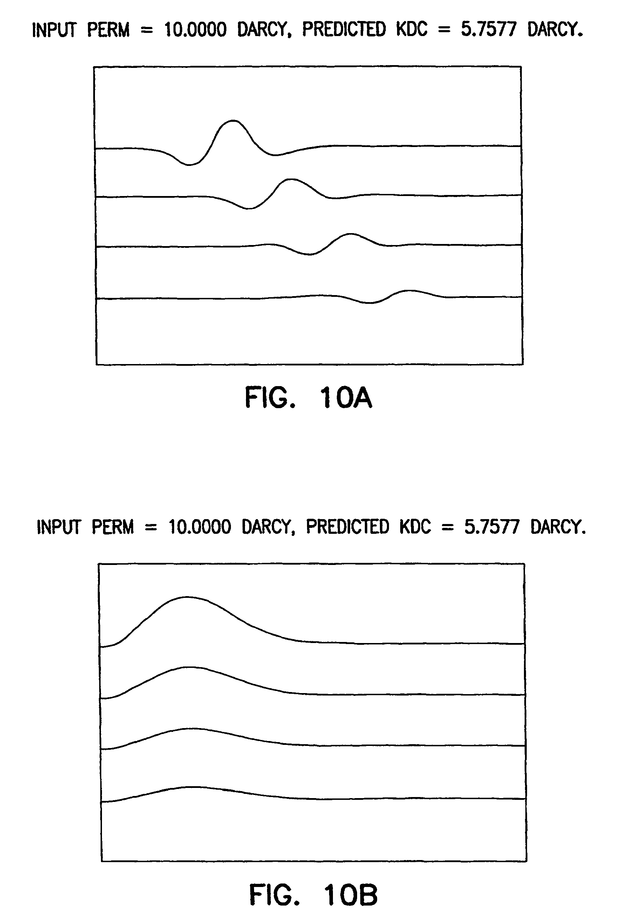

Referring now to Figures 2-10 A-B, therein are depicted exemplary synthetic time domain Stoneley waveforms generated across a range of assumed permeabilities, with all other formation and fluid properties fixed. The waveforms of Figures 1 and 2-10 A-B were generated utilizing a computer program developed by the M.I.T. Full Waveform Acoustic Logging Consortium which solves the coupled elastic and fluid equations describing general Stoneley waves. Here, the program is essentially run as a "black box" model. Prior to the present invention, this model is believed to generally represent the state of the art in permeability analysis through Stoneley waveforms. The computer program itself is used as part of a numerically intensive effort to determine permeability. The present invention, however, is analytically based. The waveforms generated by the program are therefore depicted here to demonstrate the results obtained through application of the inventor's analytical methods.

Utilizing the M.I.T. model, waveforms were generated with assumed parameters for a typical mud, and for a typical rock, such that only the permeability changed between the examples. These waveforms can be viewed as acoustic logs, generally obtained by field log measurements. As can be seen in Figures 2-10 A-B, the modeled permeability ranged between 0.0001 darcy and 10 darcies. Thus, the modeled "actual permeabilities" extend over a range of 6 orders of magnitude. These "actual permeabilities" are compared to the predicted permeability (or "predicted kdc") obtained utilizing the relation of equation 1. It is important to note that, generally speaking, methods for estimating permeability are considered viable and satisfactory if they are within 500% of actual permeability. The ranges as set forth in the table below, can be seen to fall within approximately 20% of the modeled "actual" permeability, except at the extremes, where the deviation is still well within acceptable limits.

**Table I**

| | | | | | | | |
|---|---|---|---|---|---|---|---|
| Fig. 2 | Actual perm = | .0001 | darcy | Predicted kdc = | .0002 | darcy | % error = 54 |
| Fig. 3 | Actual perm = | .0010 | darcy | Predicted kdc = | .0013 | darcy | % error = 30 |
| Fig. 4 | Actual perm = | .0100 | darcy | Predicted kdc = | .0122 | darcy | % error = 22 |
| Fig. 5 | Actual perm = | .1000 | darcy | Predicted kdc = | .1209 | darcy | % error = 20 |
| Fig. 6 | Actual perm = | .5000 | darcy | Predicted kdc = | .6127 | darcy | % error = 22 |
| Fig. 7 | Actual perm = | 1.0000 | darcy | Predicted kdc = | 1.2414 | darcy | % error = 24 |
| Fig. 8 | Actual perm = | 2.0000 | darcy | Predicted kdc = | 2.4427 | darcy | % error = 22 |
| Fig. 9 | Actual perm = | 5.0000 | darcy | Predicted kdc = | 4.8649 | darcy | % error = 2 |
| Fig. 10 | Actual perm = | 10.0000 | darcy | Predicted kdc = | 5.7577 | darcy | % error = 42 |

The "predicted kdc" is the permeability "k" which is predicted according to equation 1. The model of equation 1 assumes a monochromatic frequency, whereas the source utilized to generate the synthetic waveforms is a transient excitation about a given center frequency. For purposes of the modeling reported in Table 1, the center frequency was assumed to be a monochromatic frequency. It is believed that improved filtering would yield a further improved correlation.

Additionally, the model of equation 1 is based upon the dimension of a borehole radius without a tool therein. In the modeling reported in Table 1, the borehole radius was adjusted to utilize an "effective radius" which subtracts out the cross-sectional area occupied by a conventional logging tool.

Thus, the determination of permeability has been achieved through use of a simple "lumped" parameter given in equation 1 to reflect the sound speed in the mud columns, as that sound speed is affected by the "sidewall elasticity" of the borehole-defining formation.

In addition to the model in equations 1 and 2, further refined modeling is possible in accordance with the analytical techniques of the present invention. The present invention also contemplates the recognition that Stoneley wave propagation may be described in terms of a single dimensional parameter β. This single dimensional parameter β may be defined as follows: $β = ( {ρ}_{mud} {V}^{5 / 2} / {R}_{well} ) \sqrt{{ k φ / ( 2 {μ}_{oil} {B}_{oil} ) }} > 0$

Parameter β incorporates the modified mud sonic speed (V) and all other fluid, rock and geometrical effects. Parameter β, therefore, controls both wave energy dispersion and dissipation, and is proportional to the square root of permeability. Because this parameter reduces the number of dependent parameters to one (from eight), the parameter facilitates solution for formation characteristics such as permeability in a logging environment. Permeability is not the only parameter that can be determined using the present approach. Whenever any seven of the eight listed parameters are available, the remaining single parameter can be predicted. Such solutions may be obtained through multiple methods.

As a first example, the Stoneley waves may be studied in terms of amplitude. In evaluating the wave energy following a wave packet, wherein E (x, t) is the energy density, and x₁ (t), and x₂ (t) represent ray trajectories, and x and t denote propagation coordinate and time, respectively, the rate of change of total energy (E) may be obtained by the following relation:$d \sum ( t ) / d t = {\int }_{{x}_{1} ( t )}^{{x}_{2} ( t )} { \partial E ( x , t ) / \partial t + \partial { d x / d t E ( x , t ) } / \partial x d x }$

The equation: $\partial E / \partial t + \partial ( {c}_{g} E ) / \partial x = 2 {Ω}^{′} E$
represents a well-known wave energy conservation law, wherein c_{g} represents the group velocity. The Stoneley approximation -βK^{1/2} may be substituted for the dissipation rate Ωⁱ(K), where K is the acoustic wave number, to yield the approximate relation: $d \sum ( t ) / d t = - 2 β {K}^{1 / 2} \sum ( t )$

Where the velocity dx/dt is identified with the group velocity c_{g}, and wherein 2πf₀ = VK, where f₀ is assumed to be a nearly monochromatic wave; equation 6 may now be rewritten so as to express the rate of change in total energy as follows: $d \sum ( t ) / d t = - 2 β {( 2 π {f}_{0} / V )}^{1 / 2} \sum ( t )$

Equation 7 may then be rearranged and substituted again to isolate the dimensional parameter β as follows: $β = - 1 / 2 {( V / 2 π {f}_{0} )}^{1 / 2} Δ {t}^{- 1} d \sum ( t ) / \sum ( t )$

In this manner, the entire right side of the equation may be evaluated using data filtered to pass only Stoneley waves. The relative loss of total energy (dΣ/Σ) can be obtained from any two receivers separated by a travel time of Δt. Preferably, once the parameter β is determined in this manner, any term in the right side of equation 3 which cannot otherwise be supplied from experimental data may be solved for when the remaining terms are known.

As can be appreciated from consideration of the above discussion, this amplitude measurement approach is dependent upon direct measurement of wave amplitudes at each receiver, and upon the filtering to remove non-Stoneley waves. This approach may be satisfactory for many applications. However, an alternative approach has been discovered which facilitates the determination of permeability through reference to Stoneley wave phase velocity.

It has been previously been determined that the real frequency ω^{r} of a Stoneley wave is characterized by a dispersion relation as follows: ${ω}^{r} ( K ) = V K - β {K}^{1 / 2}$

Therefore, the phase velocity (cₚ) may be expressed as follows: ${c}_{p} = {ω}^{r} ( K ) / K = V - β {K}^{- 1 / 2}$

It is then possible to combine equation 10, again assuming a non-monochromatic wave 2πf₀ = VK, with Ωⁱ =-βK^{1/2}, and to rearrange, thereby defining the relation in terms of permeability as follows: $k = ( 4 π {f}_{0} {( V - {c}_{p} )}^{2} {{R}_{well}}^{2} / ( {{φρ}_{mud}}^{2} {V}^{6} ) ) x { {μ}_{oil} {{c}_{oil}}^{2} {ρ}_{oil} }$

Both the approaches of equation 1 above and of equation 11 are based upon an assumption that permeability is the only significant source of attenuation of the Stoneley waves. In many cases, however, this may not be true. It is known in the seismic arts that waves in dry rocks attenuate exponentially as e^{-αx}, wherein the spatial attenuation rate (α) is typically small, and in many cases may be directly proportional to the frequency (f). However, in accordance with the present invention, it has been determined that the attenuation rate must be proportional to f^{1/2} where permeability effects are predominant. Thus, where attenuation due to friction loss and from permeability are both present, the spatial attenuation rate may be expressed as follows: $α = {c}_{1} f + {c}_{2} {f}^{1 / 2}$
Wherein:
f represents the frequency;
c₁ is a constant describing the classic loss rate which is directly proportional to frequency, values for which the individual rock types are known to the industry;
c₂ is a constant directly related to parameter β, which describes the extent to which the specific lithology is permeable.

Thus, when time domain receiver waveforms are available from at least two receivers, the spectral amplitudes of the waveforms may be compared frequency by frequency to facilitate a fit to the regression of equation 12. Once the regression has been satisfied to determine c₂, parameter β may be calculated and used, as shown previously, to obtain permeability. Importantly, unlike other known systems, the use of a single constant, or of a single parameter β as a constant, facilitates a new methodology for correlating logging data wherein the multiple physical variables may be correlated with one another through self-consistent acoustic arguments.

It has been determined that numerical simulation of Stoneley waves can be inaccurate because Fourier synthesis and finite difference methods contain discretization errors. However, where it is desired to "create" Stoneley waves to facilitate evaluation of relative properties, such waves may be simulated such as in a horizontal water wave tank, having a piston to serve as a wave maker at one end of the tank. As background to the present invention, it is known that the physical system of wave propagation characteristics in continuous media may be completely characterized once the dispersion relation is known. This dispersion relation represents the specific relation between the real frequency (ω') and the wavelength (λ) or wave number (K). The wavelength (λ) and the wave number (K) are related to one another through the following relation: $λ = \frac{2 π}{K}$

For example, the relation of equation 9 has previously been discussed (ω^{r} (K) = VK - βK^{1/2}). Similarly, the hydrodynamics field has long known that surface waves (dominated by gravity, and not capillary effects) in deep water will propagate along an air-water planar interface, according to a relation satisfying: ${ω}^{r} ( K ) = U K - {g}^{1 / 2} {K}^{1 / 2}$
Wherein:
U represents the speed of the mean current in the water; and
g is the acceleration due to gravity.

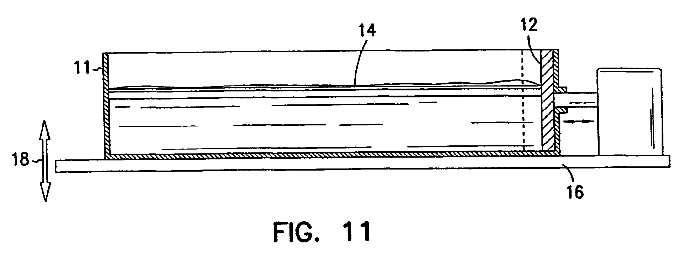

Thus, there is a direct physical analogy between Stoneley waves (in equation 9) in permeable cylindrical boreholes and long water waves (equation 14) in a deep rectangular wave tank. The tank should be sufficiently long to isolate reflections from the far end, which invalidate the analogy. Accordingly, in accordance with another aspect of the present invention and with reference to Figure 11, the piston 12 at one end of a horizontal wave tank 11 may be oscillated at a desired frequency, and the wave packet thereby created will propagate and disperse in the manner as would a Stoneley wave within a borehole. Measurements of the height of the free surface 14 will be functionally representative of pressure measurements relative to a Stoneley wave which would be obtained at a receiver. In some applications, the effects of differing formations may be readily modeled by altering the mean current speed in the water (U). Changes in the gravitational acceleration g, intended to model different β's, are accomplished by acceleration of the test tank facility in an upward or downward vertical direction.

Accordingly, the placing of a wave tank on a vertically movable platform 16 (such as, for example, an elevator) facilitates alteration of the acceleration due to gravity, and similarly facilitates observation and measurements of the elevation of the fluid waves. This vertical elevation of the water waves will be analogous to the physical radial displacement of Stoneley waves in a cylindrical borehole, and the alteration of the acceleration due to gravity along a generally vertical axis 18 will facilitate adjustment of the lumped parameter Stoneley β.

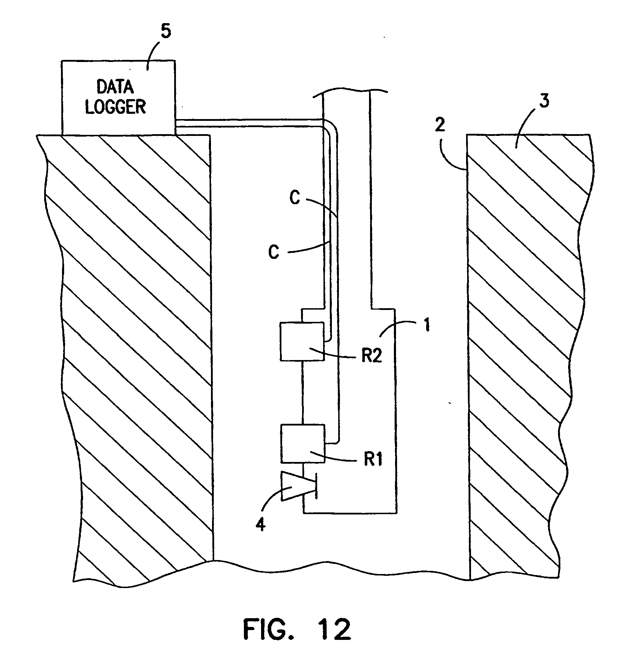

Figure 12 illustrates very diagrammatically the collection of Stoneley wave data for use in a method in accordance with the present invention.

As shown in Figure 12, a logging tool 1 is positioned within a borehole 2 formed within the surrounding geological formation 3. As will be appreciated by those skilled in the art, the logging tool 1 will be supported within the borehole 2 using a standard borehole support rig. However, in the interests of clarity, the rig has not been shown in Figure 12.

As illustrated very diagrammatically in Figure 12, the logging tool 1 carries a logging tool transmitter 4 for generating acoustic energy within a frequency range of approximately 500Hz to 2kHz with frequencies toward the lower end of this range being preferred. The logging tool also carries multiple receivers spaced apart along its length. In the example shown in Figure 12, two receivers R1 and R2 are provided. As noted above, the receivers are preferably matched so as to provide the same response to the same energy stimulus.

Each of the receivers R1 and R2 is coupled via conventional means, for example cables C as illustrated diagrammatically in Figure 12, to a data logger 5 of known form. The data logger may be, for example, a personal computer or the like which logs data received from the receivers R1 and R2 onto, for example, a removable tape drive of a standard tape drive. It will, of course, be appreciated that any known form of data logging system and data storage device may be used.

Stoneley wave data received by the receivers R1 and R2 may be logged for various depths within the borehole 2 by moving the logging tool up and down the borehole 2.

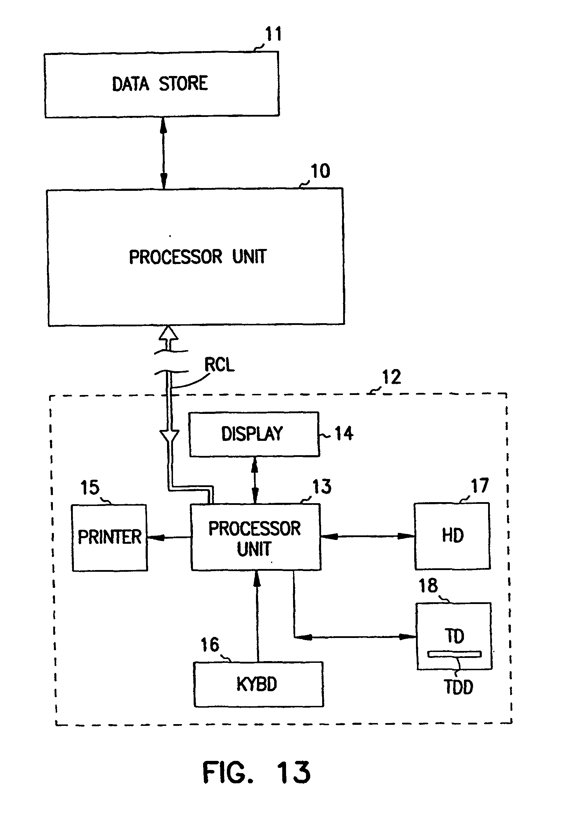

Figure 13 illustrates diagrammatically apparatus for processing Stoneley wave data logged by the data logger 5. As shown in Figure 13, the apparatus comprises a processor unit 10 having a data store 11. Generally, the processor unit 10 will comprise a personal computer, a supercomputer or a parallel processing computer and the data store unit 11 may consist of a hard disc or an array of hard disc drives as is known in the art.

Data is input to the processor unit 10 using an input arrangement 12. In the arrangement shown in Figure 13, the input arrangement 12 comprises a computer terminal connected to the processor unit 10 by a remote communications link RCL which may be of known form. For example, the link may be via an internet or intranet connection or a local area or wide area network (LAN or WAN). As shown in Figure 13, the terminal 12 has a processor unit 13 including a motherboard carrying the microprocessor, ROM and RAM as is known in the art. The processor unit 13 is coupled to a display 14, printer 15, input device in the form of a keyboard 16 and data storage devices, as shown a hard disc drive 17 and a tape drive 18 arranged to receive a tape TDD from the data logger 5 carrying Stoneley wave data logged during use of the logging tool 1.

In operation of the apparatus shown in Figure 13, Stoneley wave data received by the input device 12 via the tape drive 18 is processed by the processor unit 10 in accordance with any one of the methods described above and the resultant processed data is returned to the input device 12 for display on the display 14 and/or print out by the printer 15 so providing the user of the apparatus with information relating to the properties of the earth formation in which the borehole was formed as described above.

The processor unit 12 may be programmed to carry out the methods described above by use of the computer terminal 12 with the computer program code being supplied to the processor unit 10 via the communications link RCL as a signal carrying processor implementable instructions for controlling the processor unit or apparatus to carry out a method as described above. Thus an aspect of the present invention provides an electrical signal carrying processor implementable instructions for controlling a processor apparatus to carry out the method as hereinbefore described. As another possibility the computer program code may be supplied to the processor unit 10 on a storage medium insertable into a drive connected to the processor unit, for example the storage medium may be a tape TDD insertable into the tape drive TD or may be supplied on an exchangeable or recordable hard disc which can be inserted into the data store. An aspect of the present invention thus provides a storage medium storing processor implementable instructions for controlling a processor apparatus to carry out the method as hereinbefore described.

Many modifications and variations may be made in the techniques and structures described and illustrated herein without departing from the scope of the present invention as defined by the following claims. Accordingly, it should be readily understood that the techniques and structures described and illustrated herein are illustrative only, and are not to be considered as limitations upon the scope of the present invention.

## Claims

1. A method of evaluating a parameter of a sub-surface formation, comprising the steps of:
providing measurements of Stoneley wave propagation in a fluid column within a borehole penetrating said formation; and
correlating said Stoneley wave propagation data with parameters of said formation and parameters of the fluid column within said borehole to define a single dimensional parameter representing earth, fluid and borehole geometric properties, thereby enabling a value for any single one of those earth, fluid and borehole geometric properties to be determined from the determined value ofthe single dimensional parameter and provided values for the other ones of those earth, fluid and borehole geometric properties.

2. The method of claim 1, wherein said Stoneley wave propagation data, said formation parameters and said fluid parameters are correlated to evaluate the permeability of said formation.

3. The method of claim 2, wherein the measurements of Stoneley wave propagation comprise at least one of the amplitude of said Stoneley waves and the phase velocity of said Stoneley waves and said permeability is evaluated in response to at least one of the amplitude of said Stoneley waves and the phase velocity of said Stoneley waves.

4. The method of any one of the preceding claims, wherein the measurements of Stoneley wave propagation are provided from Stoneley wave data received by two spaced-apart receiving locations in response to energy being imparted into the fluid within the borehole and the single dimensional parameter includes a single velocity parameter representative of sound speed within a fluid column and conected for sidewall elasticity.

5. The method of claim 4, further comprising the step of functionally relating an indicator of the single velocity parameter to empirically-determined parameters of said formation and of said fluid in said borehole to define the single dimensional parameter, and utilizing said single dimensional parameter to determine the permeability of said formation.

6. The method of claim 5, wherein said formation parameters and said fluid parameters are functionally related to one another through the following relation: $β - ( {ρ}_{mud} {V}^{5 / 2} / {R}_{well} ) \sqrt{{ k ϕ / ( 2 {μ}_{oil} {B}_{oil} ) }} > 0$
wherein:
β represents the single dimensional parameter;
ρ_{mod} represents the density of the mud;
R_{well} represents the well radius;
k represents the formation permeability;
ϕ represents the porosity of the formation;
µₒᵢₗ represents the pore fluid viscosity;
Bₒᵢₗ represents the pore fluid bulk modulus; and
V represents a velocity parameter defined by the relation: $V = 1 / \sqrt{{ρ}_{mud} ( 1 / {B}_{mud} + 1 / {G}_{shear} )}$
Wherein:
B_{mod} represents the bulk modulus of the borehole mud or fluid, and
Gₛₕₑₐᵣ represents the solid shear modulus.

7. The method of claim 6, wherein said permeability is determined through the relation: $k = \frac{2 {μ}_{oil} {ρ}_{oil} {{{c}_{oil}}^{2} {R}_{well}}^{2} {{ ( {Σ}_{c} - {Σ}_{d} ) / {Σ}_{c} }}^{2} {( V / Δ t )}^{2}}{{{ρ}_{mud}}^{2} {V}^{5} ϕ { 8 π V {f}_{0} - ( 2 V / Δ t ) ( {Σ}_{c} - {Σ}_{d} ) / {Σ}_{c} }}$
ρₒᵢₗ represents the density of the fluid within the borehole;
cₒᵢₗ represents the speed of sound in the fluid within the borehole;
Σ_{c} represents the total energy of the waveform from a first one of the two spaced-apart receiving locations closer to the energy imparting location than the second of the two spaced-apart receiving locations;
Σ_{d} represents the total energy of the waveform from the second receiving location;
f₀ represents the center frequency (Hz) at which the transmitter operates; and
Δt represents the distance between the two receivers D_{recvr} divided by the velocity V, that is Δt=D_{recvr}/V.

8. The method of Claim 1, wherein said step of providing measurements of Stoneley wave propagation in the fluid column includes determining the amplitude of Stoneley waves at a plurality of spaced locations within the borehole in response to a sonic signal introduced into said borehole; and wherein the single dimensional parameter comprises a term indicative of the velocity of said sonic energy within said fluid column which term is a single velocity parameter which is functionally representative of the speed of propagation of said sonic signal within the fluid column within said borehole, as said speed ofpropagation is affected by the elasticity of said earth formations defining said borehole and containing said fluid column.

9. The method of claim 8, wherein the property determined by the correlating step is the formation permeability and the single dimensional parameter is proportional to the square root of said permeability.

10. The method of claim 1, comprising the step of imparting energy into the fluid column, wherein the measurements of Stoneley wave propagation are provided by determining a property of Stoneley waves generated by said imparted energy within said borehole; and wherein the correlating step enables the permeability of said earth formation to be modelled in response to said determined Stoneley wave property.

11. The method of claim 10, wherein said determined Stoneley wave property is the phase velocity of said Stoneley waves.

12. The method of claim 10, wherein said determined Stoneley wave property is the amplitude of said Stoneley waves.

13. The method of claim 10, wherein the single dimensional parameter functionally relates to one another parameters comprising:
the density of said fluid (ρ_{mod}), the pore fluid modulus (Bₒᵢₗ), the radius of said borehole (R_{well}), the rock porosity (ϕ), the pore fluid viscosity (µₒᵢₗ), and the solid shear modulus (Gₛₕₑₐᵣ).

14. The method of claim 13, wherein said functionally related parameters further comprise a parameter representative of the velocity of sound within said fluid.

15. The method of claim 14, wherein said parameter representative of the velocity of sound within said fluid is reflective of the effects of borehole sidewall elasticity on said sound velocity.

16. The method of claim 1, wherein the single dimensional parameter is further determined in response to attenuation of said Stoneley waves due to permeability of said formations defining said borehole.

17. The method of claim 1, wherein the single dimensional parameter is proportional to the square root of permeability.

18. The method of claim 14, wherein the single dimensional parameter is functionally representative of variations in the solids shear modulus of said formation defining said borehole.

19. Apparatus for evaluating a parameter of a sub-surface formation, comprising:
receiving means for receiving measurements of Stoneley wave propagation in a fluid column within a borehole penetrating said formation; and
correlating means for correlating said received Stoneley wave propagation data with parameters of said formation and parameters of the fluid column within said borehole to define a single dimensional parameter representing earth, fluid and borehole geometric properties, thereby enabling a value for any single one of those earth, fluid and borehole geometric properties to be determined from the determined value of the single dimensional parameter and provided values for the other ones of those earth, fluid and borehole geometric properties.

20. Apparatus of claim 19, wherein the receiving means is operable to receive measurement data relating to Stoneley wave data generated at two spaced receivers within said borehole; and
wherein the correlating means is operable to perform the correlation to determine the permeability of said formation utilizing said single dimensional parameter.

21. Apparatus of claim 19, wherein the receiving means comprises means for determining the amplitude of Stoneley waves at a plurality of spaced locations within a borehole penetrating said earth formation from data relating to Stoneley wave data received by two spaced receivers within said borehole; and
wherein the correlating means comprises means for defining the single dimensional parameter as a single velocity parameter which is functionally representative of the sound speed within the fluid column within said borehole, as said sound speed is affected by the elasticity of said earth formations defining said borehole and containing said fluid column.

22. Apparatus of claim 19, wherein the correlating means comprises:
means for determining a property of said Stoneley waves;
means for determining as the single dimensional parameter a single parameter reflecting dispersion and dissipation of said Stonelcy waves; and
means for modeling the permeability of said formation in response to said determined Stoneley wave property.

23. A storage medium storing processor implementable instructions for controlling a processor apparatus to carry out the method of any one of claims 1 to 18.

24. An electrical signal carrying processor implementable instructions for controlling a processor apparatus to carry out the method of any one of claims 1 to 18.

## Patentansprüche

1. Verfahren zum Auswerten eines Parameters einer Sub-Oberflächenformation, wobei
Messungen einer Stoneley-Wellenausbreitung in einer Fluidsäule innerhalb eines Bohrlochs, das die Formation durchdringt, bereitgestellt werden, und
die Stoneley-Wellenausbreitungsdaten mit Parametern der Formation und Parametern der Fluidsäule innerhalb des Bohrlochs korreliert werden, um einen eindimensionalen Parameter zu definieren, der Erd-, Fluid- und Bohrlochgeometrie-Eigenschaften darstellt, wodurch es möglich wird, einen Wert für eine einzelne der Erd-, Fluid- und Bohrlochgeometrie-Eigenschaften aus dem bestimmten Wert für den eindimensionalen Parameter und übergebenen Werten für die anderen der Erd-, Fluid- und Bohrlochgeometrie-Eigenschaften zu bestimmen.

2. Verfahren nach Anspruch 1, wobei die Stoneley-Wellenausbreitungsdaten, die Formationsparameter und die Fluidparameter korreliert werden, um die Permeabilität der Formation auszuwerten.

3. Verfahren nach Anspruch 2, wobei die Messungen der Stoneley-Wellenausbreitung die Amplitude und/oder die Phasengeschwindigkeit der Stoneley-Wellen umfassen, und die Permeabilität gemäß der Amplitude und/oder der Phasengeschwindigkeit der Stoneley-Wellen ausgewertet wird.

4. Verfahren nach einem der vorstehenden Ansprüche, wobei die Messungen der Stoneley-Wellenausbreitung aus Stoneley-Wellendaten bereitgestellt werden, die an zwei in Abstand voneinander befindlichen Empfangsstationen in Reaktion auf die Einwirkung von Energie auf das Fluid innerhalb des Bohrlochs empfangen werden, und der eindimensionale Parameter einen einzelnen Geschwindigkeitsparameter enthält, der die Schallgeschwindigkeit innerhalb einer Fluidsäule darstellt und bezüglich der Seitenwandelastizität korrigiert ist.

5. Verfahren nach Anspruch 4, wobei ferner ein Indikator des einzelnen Geschwindigkeitsparameters funktionsmäßig in Bezug zu empirisch bestimmten Parametern der Formation und des Fluids in dem Bohrloch gesetzt werden, um den eindimensionalen Parameter zu definieren, und der eindimensionale Parameter verwendet wird, um die Permeabilität der Formation zu bestimmen.

6. Verfahren nach Anspruch 5, wobei die Formationsparameter und die Fluidparameter funktionsmäßig zueinander durch die folgende Relation in Bezug gesetzt werden: $β - ( {ρ}_{mud} {V}^{5 / 2} / {R}_{well} ) \sqrt{( k ϕ / ( 2 {μ}_{oil} {B}_{oil} ) )} > 0$
wobei
β den eindimensionalen Parameter,
ρ_{mud} die Dichte des Schlamms,
R_{well} den Lochradius,
k die Formationspermeabilität,
ϕ die Porösität der Formation,
µₒᵢₗ die Poren-Fluidviskosität,
Bₒᵢₗ das Poren-Fluid-Massenmodul, und
V einen durch die Relation $V = 1 / \sqrt{{ρ}_{mud} ( 1 / {B}_{mud} + 1 / {G}_{shear} )}$
definierten Geschwindigkeitsparameter darstellt, wobei
B_{mud} das Massenmodul des Bohrlochschlamms oder Fluids, und
Gₛₕₑₐᵣ das Festkörper-Schermodul darstellt.

7. Verfahren nach Anspruch 6, wobei die Permeabilität durch die Relation $k = \frac{2 {μ}_{oil} {ρ}_{oil} {{c}_{oil}}^{2} {{R}_{well}}^{2} {{ ( {Σ}_{c} - {Σ}_{d} ) / {Σ}_{c} }}^{2} {( V / Δ t )}^{2}}{{{ρ}_{mud}}^{2} {V}^{5} ϕ { 8 π V {f}_{0} - ( 2 V / Δ t ) ( {Σ}_{c} - {Σ}_{d} ) / {Σ}_{c} }}$
bestimmt wird, wobei
ρₒᵢₗ die Dichte des Fluids innerhalb des Bohrlochs,
cₒᵢₗ die Schallgeschwindigkeit in dem Fluid innerhalb des Bohrlochs,
Σ_{c} die Gesamtenergie der Wellenform von einer der zwei in Abstand voneinander befindlichen Empfangsstationen, die näher an der Energieeinwirkungsstelle liegt als die zweite der zwei in Abstand voneinander befindlichen Empfangsstationen,
Σ_{d} die Gesamtenergie der Wellenform von der zweiten Empfangsstation,
f₀ die mittlere Frequenz (Hz), auf der der Transmitter betrieben wird, und
Δt den Abstand zwischen den zwei Empfängern D_{recvr} geteilt durch die Geschwindigkeit V, d.h. Δt = D_{recvr}/V, darstellt.

8. Verfahren nach Anspruch 1, wobei beim Bereitstellen der Messungen der Stoneley-Wellenausbreitung in der Fluidsäule die Amplitude der Stoneley-Wellen an mehreren in Abstand voneinander befindlichen Stellen innerhalb des Bohrlochs in Reaktion auf ein Schallsignal bestimmt wird, das in das Bohrloch eingeleitet wird, und wobei der eindimensionale Parameter einen Ausdruck aufweist, der die Geschwindigkeit der Schallenergie innerhalb der Fluidsäule angibt, wobei der Ausdruck ein einzelner Geschwindigkeitsparameter ist, der funktionsmäßig die Ausbreitungsgeschwindigkeit des Schallsignals in der Fluidsäule innerhalb des Bohrlochs darstellt, wenn die Ausbreitungsgeschwindigkeit durch die Elastizität der Erdformationen beeinflußt wird, die das Bohrloch eingrenzen und die Fluidsäule enthalten.

9. Verfahren nach Anspruch 8, wobei die durch die Korrelation bestimmte Eigenschaft in der Formationspermeabilität besteht, und der eindimensionale Parameter proportional zur Quadratwurzel der Permeabilität ist.

10. Verfahren nach Anspruch 1, das ferner das Einwirken von Energie auf die Fluidsäule umfaßt, wobei die Messungen der Stoneley-Wellenausbreitung vorgenommen werden, indem eine Eigenschaft der durch die eingewirkte Energie erzeugten Stoneley-Wellen innerhalb des Bohrlochs bestimmt wird, und wobei es durch die Korrelation möglich wird, die Permeabilität der Erdformationen gemäß der bestimmten Stoneley-Welleneigenschaft zu modellieren.

11. Verfahren nach Anspruch 10, wobei die bestimmte Stoneley-Welleneigenschaft die Phasengeschwindigkeit der Stoneley-Wellen ist.

12. Verfahren nach Anspruch 10, wobei die bestimmte Stoneley-Welleneigenschaft die Amplitude der Stoneley-Wellen ist.

13. Verfahren nach Anspruch 10, wobei der eindimensionale Parameter funktionsmäßig auf einen der folgenden anderen Parametern bezogen ist:
die Dichte des Fluids (ρ_{mud}), das Poren-Fluidmodul (Bₒᵢₗ), den Radius des Bohrlochs (R_{well}), die Felsporösität (ϕ), die Poren-Fluidviskosität (µₒᵢₗ), und das Festkörper-Schermodul (Gₛₕₑₐᵣ).

14. Verfahren nach Anspruch 13, wobei die funktionsmäßig bezogenen Parameter ferner einen Parameter umfassen, der die Schallgeschwindigkeit innerhalb des Fluids darstellt.

15. Verfahren nach Anspruch 14, wobei der die Schallgeschwindigkeit innerhalb des Fluids darstellende Parameter die Effekte der Bohrlochseitenwandelastizität auf die Schallgeschwindigkeit widerspiegelt.

16. Verfahren nach Anspruch 1, wobei der eindimensionale Parameter ferner gemäß der Dämpfung der Stoneley-Wellen aufgrund der Permeabilität der das Bohrloch eingrenzenden Formationen bestimmt wird.

17. Verfahren nach Anspruch 1, wobei der eindimensionale Parameter proportional zur Quadratwurzel der Permeabilität ist.

18. Verfahren nach Anspruch 14, wobei der eindimensionale Parameter funktionsmäßig Variationen im Festkörper-Schermodul der das Bohrloch eingrenzenden Formation darstellt.

19. Gerät zum Auswerten eines Parameters einer Sub-Oberflächenformation, mit
einer Empfangseinrichtung zum Empfangen von Messungen einer Stoneley-Wellenausbreitung in einer Fluidsäule innerhalb eines die Formation durchdringenden Bohrlochs, und
einer Korrelationseinrichtung zum Korrelieren der empfangenen Stoneley-Wellenausbreitungsdaten mit Parametern der Formation und Parametern der Fluidsäule innerhalb des Bohrlochs, um einen eindimensionalen Parameter zu definieren, der Erd-, Fluid- und Bohrlochgeometrie-Eigenschaften darstellt, wodurch es möglich ist, einen Wert für eine einzelne dieser Erd-, Fluid- und Bohrlochgeometrie-Eigenschaften aus dem bestimmten Wert des eindimensionalen Parameters und übergebenen Werten der anderen dieser Erd-, Fluid- und Bohrlochgeometrie-Eigenschaften zu bestimmen.

20. Gerät nach Anspruch 19, wobei die Empfangseinrichtung dazu ausgelegt ist, Meßdaten in Bezug auf die an zwei in Abstand voneinander befindlichen Empfängern innerhalb des Bohrlochs erzeugten Stoneley-Wellendaten zu empfangen, und
wobei die Korrelationseinrichtung dazu ausgelegt ist, die Korrelation zum Bestimmen der Permeabilität der Formation unter Verwendung des eindimensionalen Parameters durchzuführen.

21. Gerät nach Anspruch 19, wobei die Empfangseinrichtung eine Einrichtung zum Bestimmen der Amplitude der Stoneley-Wellen an mehreren in Abstand voneinander befindlichen Stellen innerhalb eines die Erdformation durchdringenden Bohrlochs aus Daten zu bestimmen, die sich auf Stoneley-Wellen-Daten beziehen, die durch zwei in Abstand voneinander innerhalb des Bohrlochs befindliche Empfänger empfangen wurden, und
wobei die Korrelationseinrichtung eine Einrichtung zum Definieren des eindimensionalen Parameters als einen einzelnen Geschwindigkeitsparameter aufweist, der funktionsmäßig die Schallgeschwindigkeit in der Fluidsäule innerhalb des Bohrlochs darstellt, wenn die Schallgeschwindigkeit durch die Elastizität der das Bohrloch eingrenzenden und die Fluidsäule enthaltenden Erdformationen beeinflußt wird.

22. Gerät nach Anspruch 19, wobei die Korrelationseinrichtung aufweist:
eine Einrichtung zum Bestimmen einer Eigenschaft der Stoneley-Wellen,
eine Einrichtung zum Bestimmen eines einzelnen Parameters, der Dispersion und Dissipation der Stoneley-Wellen widerspiegelt, als den eindimensionalen Parameter, und
eine Einrichtung zum Modellieren der Permeabilität der Formation gemäß der ermittelten Stoneley-Welleneigenschaft.

23. Speichermedium, das prozessorimplementierbare Befehle zum Steuern eines Prozessor-Geräts aufweist, um das Verfahren nach einem der Ansprüche 1 bis 18 auszuführen.

24. Elektrisches Signal, das prozessorimplementierbare Befehle zum Steuern eines Prozessor-Geräts trägt, um das Verfahren nach einem der Ansprüche 1 bis 18 auszuführen.

## Revendications

1. Procédé d'évaluation d'un paramètre d'une formation souterraine, comprenant les étapes consistant à :
fournir des mesures de propagation d'ondes de Stoneley dans une colonne de fluide à l'intérieur d'un trou de forage pénétrant dans ladite formation ; et
corréler lesdites données de propagation d'ondes de Stoneley avec des paramètres de ladite formation et avec des paramètres de la colonne de fluide à l'intérieur dudit trou de forage pour définir un paramètre unidimensionnel représentant des propriétés géométriques du sol, du fluide et du trou de forage, afin de permettre la détermination d'une valeur pour l'une quelconque de ces propriétés géométriques du sol, du fluide et du trou de forage à partir de la valeur déterminée du paramètre unidimensionnel et de fournir des valeurs pour les autres de ces propriétés géométriques du sol, du fluide et du trou de forage.

2. Procédé selon la revendication 1, dans lequel lesdites données de propagation d'ondes de Stoneley, lesdits paramètres de formation et lesdits paramètres de fluide sont corrélés pour évaluer la perméabilité de ladite formation.

3. Procédé selon la revendication 2, dans lequel les mesures de propagation d'ondes de Stoneley comprennent au moins l'une de l'amplitude desdites ondes de Stoneley et de la vitesse de phase desdites ondes de Stoneley et dans lequel ladite perméabilité est évaluée en réponse à au moins l'une de l'amplitude desdites ondes de Stoneley et de la vitesse de phase desdites ondes de Stoneley.

4. Procédé selon l'une quelconque des revendications précédentes, dans lequel les mesures de propagation d'ondes de Stoneley sont fournies à partir de données d'ondes de Stoneley reçues par deux points de réception mutuellement espacés en réponse à l'application d'énergie au fluide à l'intérieur du trou de forage et dans lequel le paramètre unidimensionnel comprend un paramètre de vitesse unique représentatif de la vitesse du son à l'intérieur d'une colonne de fluide et corrigé en fonction de l'élasticité de la paroi latérale.

5. Procédé selon la revendication 4, comprenant en outre l'étape consistant à lier fonctionnellement un indicateur du paramètre de vitesse unique à des paramètres déterminés empiriquement de ladite formation et dudit fluide dans ledit trou de forage pour définir le paramètre unidimensionnel, et utiliser ledit paramètre unidimensionnel pour déterminer la perméabilité de ladite formation.

6. Procédé selon la revendication 5, dans lequel lesdits paramètres de formation et lesdits paramètres de fluide sont fonctionnellement liés l'un à l'autre par la relation suivante : $β = ( {ρ}_{boue} {V}^{5 / 2} / {R}_{puits} ) \sqrt{{ k ϕ / 2 {μ}_{pétrole} {B}_{pétrole} ) }} > 0$
où :
β représente le paramètre unidimensionnel ;
ρ_{boue} représente la densité de la boue ;
Rₚᵤᵢₜₛ représente le rayon du puits ;
k représente la perméabilité de la formation ;
ϕ représente la porosité de la formation ;
µ pétrole représente la viscosité du fluide de pore ;
B_{pétrole} représente le module de compressibilité du fluide de pore ; et
V représente un paramètre de vitesse défini par la relation : $V = 1 / \sqrt{{ρ}_{boue} ( 1 / {B}_{boue} + 1 / {G}_{cisaillement} )}$
où :
B_{boue} représente le module de compressibilité de la boue ou du fluide du trou de forage, et
G_{cisaillement} représente le module de cisaillement solide.

7. Procédé selon la revendication 6, dans lequel ladite perméabilité est déterminée par la relation suivante : $k = \frac{2 {μ}_{pétrole} {ρ}_{pétrole} {{c}_{pétrole}}^{2} {{R}_{puits}}^{2} {{ ( {Σ}_{c} - {Σ}_{d} ) / {Σ}_{c} }}^{2} {( V / Δ t )}^{2}}{{{ρ}_{boue}}^{2} {V}^{5} ϕ { 8 π V {f}_{0} - ( 2 V / Δ t ) ( {Σ}_{c} - {Σ}_{d} ) / {Σ}_{c} }}$
ρ_{pétrole} représente la densité du fluide dans le trou de forage ;
c_{pétrole} représente la vitesse du son dans le fluide à l'intérieur du trou de forage ;
Σ_{c} représente l'énergie totale de la forme d'onde d'une première des deux positions de réception mutuellement espacées qui est plus proche de la position d'application d'énergie que la seconde des deux positions de réception mutuellement espacées ;
Σ_{d} représente l'énergie totale de la forme d'onde provenant de la seconde position de réception ;
f₀ représente la fréquence centrale (Hz) à laquelle fonctionne l'émetteur ; et
Δt représente la distance entre les deux récepteurs D_{rec} divisée par la vitesse V, c'est-à-dire Δt = D_{rec}/V.

8. Procédé selon la revendication 1, dans lequel ladite étape de fourniture de mesures de propagation d'ondes de Stoneley dans la colonne de fluide comprend la détermination de l'amplitude d'ondes de Stoneley en une pluralité de positions espacées à l'intérieur du trou de forage en réponse à un signal sonore introduit dans ledit trou de forage ; et dans lequel le paramètre unidimensionnel comprend un terme représentatif de la vitesse de ladite énergie sonore à l'intérieur de ladite colonne de fluide, lequel terme est un paramètre de vitesse unique qui est fonctionnellement représentatif de la vitesse de propagation dudit signal sonore à l'intérieur de ladite colonne de fluide dans ledit trou de forage, lorsque ladite vitesse de propagation est affectée par l'élasticité desdites formations terrestres définissant ledit trou de forage et contenant ladite colonne de fluide.

9. Procédé selon la revendication 8, dans lequel la propriété déterminée par l'étape de corrélation est la perméabilité de la formation et le paramètre unidimensionnel est proportionnel à la racine carrée de ladite perméabilité.

10. Procédé selon la revendication 1, comprenant l'étape d'application d'énergie dans la colonne de fluide, dans lequel les mesures de propagation d'ondes de Stoneley sont fournies par détermination d'une propriété d'ondes de Stoneley produite par ladite énergie appliquée à l'intérieur dudit trou de forage ; et dans lequel l'étape de corrélation permet de modéliser la perméabilité de ladite formation terrestre en réponse à ladite propriété déterminée des ondes de Stoneley.

11. Procédé selon la revendication 10, dans lequel ladite propriété déterminée des ondes de Stoneley est la vitesse de phase desdites ondes de Stoneley.

12. Procédé selon la revendication 10, dans lequel ladite propriété déterminée des ondes de Stoneley est l'amplitude desdites ondes de Stoneley.

13. Procédé selon la revendication 10, dans lequel le paramètre unidimensionnel relie fonctionnellement les uns aux autres des paramètres comprenant :
la densité dudit fluide (ρ_{boue}), le module du fluide de pore (B_{pétrole}), le rayon dudit trou de forage (Rₚᵤᵢₜₛ), la porosité de la roche (ϕ), la viscosité du fluide de pore (µ_{pétrole}), et le module de cisaillement solide (G_{cisaillement}).

14. Procédé selon la revendication 13, dans lequel lesdits paramètres liés fonctionnellement comprennent en outre un paramètre représentatif de la vitesse du son dans ledit fluide.

15. Procédé selon la revendication 14, dans lequel ledit paramètre représentatif de la vitesse du son dans ledit fluide est représentatif des effets de l'élasticité de la paroi latérale du trou de forage sur ladite vitesse du son.

16. Procédé selon la revendication 1, dans lequel ledit paramètre unidimensionnel est en outre déterminé en réponse à l'atténuation desdites ondes de Stoneley due à la perméabilité desdites formations définissant ledit trou de forage.

17. Procédé selon la revendication 1, dans lequel le paramètre unidimensionnel est proportionnel à la racine carrée de la perméabilité.

18. Procédé selon la revendication 14, dans lequel le paramètre unidimensionnel est fonctionnellement représentatif de variations se produisant dans le module de cisaillement des solides de ladite formation définissant ledit trou de forage.

19. Appareil pour évaluer un paramètre d'une formation souterraine, comprenant :
un moyen de réception pour recevoir des mesures de propagation d'ondes de Stoneley dans une colonne de fluide à l'intérieur d'un trou de forage pénétrant dans ladite formation ; et
un moyen de corrélation pour corréler lesdites données de propagation d'ondes de Stoneley reçues avec des paramètres de ladite formation et avec des paramètres de la colonne de fluide à l'intérieur dudit trou de forage pour définir un paramètre unidimensionnel représentant des propriétés géométriques du sol, du fluide et du trou de forage, cela permettant ainsi de déterminer une valeur de l'une quelconque unique de ces propriétés géométriques du sol, du fluide et du trou de forage à partir de la valeur déterminée du paramètre unidimensionnel et de fournir des valeurs pour les autres de ces propriétés géométriques du sol, du fluide et du trou de forage.

20. Appareil selon la revendication 19, dans lequel le moyen de réception a pour fonction de recevoir des données de mesures liées à des données d'ondes de Stoneley produites sur deux récepteurs mutuellement espacés à l'intérieur dudit trou de forage ; et
dans lequel le moyen de corrélation a pour fonction d'effectuer la corrélation afin de déterminer la perméabilité de ladite formation en utilisant ledit paramètre unidimensionnel.

21. Appareil selon la revendication 19, dans lequel le moyen de réception comprend un moyen pour déterminer l'amplitude d'ondes de Stoneley en une pluralité de positions espacées à l'intérieur d'un trou de forage pénétrant dans ladite formation terrestre à partir de données liées à des données d'ondes de Stoneley reçues par deux récepteurs espacés à l'intérieur dudit trou de forage ; et
dans lequel le moyen de corrélation comprend un moyen pour définir le paramètre unique en tant que paramètre de vitesse unique qui est fonctionnellement représentatif de la vitesse du son à l'intérieur de la colonne de fluide dans ledit trou de forage, lorsque ladite vitesse du son est affectée par l'élasticité desdites formations terrestres définissant ledit trou de forage et contenant ladite colonne de fluide.

22. Appareil selon la revendication 19, dans lequel le moyen de corrélation comprend :
un moyen pour déterminer une propriété desdites ondes de Stoneley ;
un moyen pour déterminer en tant que paramètre unidimensionnel un paramètre unique représentatif de la dispersion et de la dissipation desdites ondes de Stoneley ; et
un moyen pour modéliser la perméabilité de ladite formation en réponse à ladite propriété déterminée des ondes de Stoneley.

23. Support de stockage stockant des instructions pouvant être mises en oeuvre par un processeur pour commander un appareil processeur pour mise en oeuvre du procédé selon l'une quelconque des revendications 1 à 18.

24. Signal électrique transportant des instructions pouvant être mises en oeuvre par un processeur pour commander un appareil processeur pour mise en oeuvre du procédé selon l'une quelconque des revendications 1 à 18.
